# EUROPEAN PATENT SPECIFICATION

(11) **EP 3 696 763 B1**
(45) Date of publication and mention of the grant of the patent: **19.10.2022**
(21) Application number: 20156357.4
(22) Date of filing: 10.02.2020
(51) Int. Cl.: G06Q 30/06

(54) **METHOD OF CREATING AND OPTIMIZING CUSTOMIZED DATA SHEETS, CUSTOMER PORTAL AND NON-TRANSITORY COMPUTER-READABLE RECORDING MEDIUM**
VERFAHREN ZUM ERSTELLEN UND OPTIMIEREN VON KUNDENSPEZIFISCHEN DATENBLÄTTERN, KUNDENPORTAL UND NICHTTRANSIENTES COMPUTERLESBARES AUFZEICHNUNGSMEDIUM
PROCÉDÉ DE CRÉATION ET D'OPTIMISATION DE FICHES DE DONNÉES PERSONNALISÉES, PORTAIL CLIENT ET SUPPORT D'ENREGISTREMENT LISIBLE PAR ORDINATEUR NON TRANSITOIRE

(30) Priority: 13.02.2019 US 201916274938
(43) Date of publication of application: 19.08.2020
(73) Proprietor: Rohde & Schwarz GmbH & Co. KG, 81671 München (DE)
(72) Inventor: RÜNGELER, Matthias, 85570 Markt Schwaben (DE); SCHORR, Torsten, 81669 München (DE)
(74) Representative: Isarpatent

(56) References cited:
- US-A1- 2016 320 432
- Anonymous: "Digital storage oscilloscope - Wikipedia", , 6 March 2017 (2017-03-06), XP055703107, Retrieved from the Internet: URL:https://en.wikipedia.org/w/index.php?t itle=Digital_storage_oscilloscope&oldid=76 8887468 [retrieved on 2020-06-09]
- Anonymous: "Spectrum analyzer - Wikipedia", , 11 September 2018 (2018-09-11), XP055703110, Retrieved from the Internet: URL:https://en.wikipedia.org/w/index.php?t itle=Spectrum_analyzer&oldid=859073194 [retrieved on 2020-06-09]

## Description

### FIELD OF THE INVENTION

The invention relates to methods of creating and optimizing customized data sheets. The invention further relates to a combination of a measuring equipment and a customer portal and a non-transitory computer-readable recording medium.

### TECHNICAL BACKGROUND

A data sheet, datasheet, or spec sheet is a document that summarizes the performance and other technical characteristics of an electronic device (or component thereof, subsystem, machine, software, etc.) in sufficient detail that allows a design engineer to understand the role of the component in the overall system. In the data sheet, for each device type, the electric characteristics to be published are represented by numerical values or corresponding graphs. Furthermore, in regard to the electric characteristics, a value of a characteristic parameter and a graph of a characteristic curve are described for each of various items.

Presently, for data sheet generation an engineer takes some measuring instruments and measures data sheet values for a limited number of performance scenarios. This has to be repeated for every new hardware and software version of the electronic device. For each new electronic device type, a new device-specific data sheet is then created. For example, for a spectrum analyzer the amplitude flatness in dB for a certain signal power, attenuation in the instrument, bandwidth and frequency are stated. Each parameter depends on many different variables, however, only a few of them are specified in the data sheet. Additionally, in practice, these parameters are measured using only few measuring devices and as such may not be representative. Also, the user may be interested in data sheet values for different performance scenarios. As such, the generated data sheet is a non-individualized across-the-board data sheet that does typically not contain specific values and/or performance scenarios which are relevant for the specific user of this specific electronic device.

US 2016/0320432 A1 discloses the generation of a data sheet for a device under test (DUT). A user, who is not familiar with how to properly use the measurement instrument for measuring a DUT, is assisted to select the performance parameters for the data sheet and then perform the measurements automatically. It also aggregates each measurement in a database. However, the generation of the data sheets is based on the measurements, but does not generate a brief data sheet for the user of the measurement instrument based on the specifics of the user's planned measurement.

US 2016/320432 A1 relates to a method of evaluating an electronic device involving display of a characteristic parameter items in a data sheet format.

### SUMMARY OF THE INVENTION

Against this background, the object of the present invention is to provide improved methods, a combination of a measuring equipment and a customer portal, and a non-transitory computer-readable recording medium of creating and optimizing customized data sheets for a predefined instrument type.

This object is solved by methods of creating customized data sheets according to claim 1 and claim 2, a combination of a measuring equipment and a customer portal for creating customized data sheets according to claim 11, and a non-transitory computer-readable recording medium according to claim 12. Hereinafter, up to the "brief description of the drawings", expressions like "...aspect according to the invention", "according to the invention", or "the present invention", relate to technical teaching of the broadest embodiment as claimed with the independent claims. Expressions like "implementation", "design", "optionally", "preferably", "scenario", "aspect" or similar relate to further embodiments as claimed, and expressions like "example", "...aspect according to an example", "the disclosure describes", or "according to the present disclosure" describe technical teaching which relates to the understanding of the invention or its embodiments, which, however, is not claimed as such.

According to a first aspect according to the invention, a method of creating and optimizing customized data sheets is provided for a predefined instrument type, the method comprising: determining, using a measurement equipment and controlled by a controller, an amount of performance metrics for a plurality of different instrument types, wherein each set of performance metrics for a specific instrument type is based on a plurality of different performance scenarios; storing the performance metrics together with corresponding information of the instrument type and performance scenarios in a database; providing a human-machine interface coupled to the database, wherein the human-machine interface is configured to credibly assist the user in performing a user request by employing of a guided human-machine interaction process; receiving the user request via an input terminal of the human-machine interface, wherein the user request comprises a first request for a selected instrument or instrument type of the plurality of instrument types and a second request for a selected subset of performance scenarios of the plurality of different performance scenarios for the selected instrument or instrument type; generating, by the human-machine interface, a customized data sheet automatically based on the user request by extracting from the database the information of the selected instrument type and the selected subset of performance scenarios together with the corresponding performance metrics.

According to a second aspect according to the invention, a customer portal for creating and optimizing customized data sheets is provided for a predefined instrument type, the customer portal comprising: a database which is configured to store performance metrics of an instrument type together with corresponding information of the instrument type and performance scenarios; providing a human-machine interface coupled to the database, wherein the human-machine interface comprises an input terminal for receiving user requests and wherein the human-machine interface is configured to credibly assist a user in performing a user request by employing of a guided human-machine interaction process by receiving from a user a first request for a selected instrument or instrument type of the plurality of instrument types and a second request for a selected subset of performance scenarios of the plurality of different performance scenarios for the selected instrument or instrument type, and to generate automatically a customized data sheet based on the user request by extracting from the database the information of the selected instrument type and the selected subset of performance scenarios together with the corresponding performance metrics.

According to a third aspect according to the invention, a non-transitory computer-readable recording medium is provided, the customer portal. The non-transitory computer-readable recording medium is configured to store instructions executable by a computer processor and to cause the computer processor to execute a method of creating and optimizing customized data sheets for a predefined instrument type, comprising: determining an amount of performance metrics for a plurality of different instrument types, wherein each set of performance metrics for a specific instrument type is based on a plurality of different performance scenarios; storing the performance metrics together with corresponding information of the instrument type and performance scenarios in a database; receiving the user request via an input terminal of a human-machine interface, which human-machine interface is configured to credibly assist the user in performing a user request by employing of a guided human-machine interaction process, wherein the user request comprises a first request for a selected instrument or instrument type of the plurality of instrument types and a second request for a selected subset of performance scenarios of the plurality of different performance scenarios for the selected instrument or instrument type; generating a customized data sheet automatically based on the user request by extracting from the database the information of the selected instrument type and the selected subset of performance scenarios together with the corresponding performance metrics.

The present invention is based on the knowledge that an exciting current flowing through the excitation device is influenced not only by the periodic signal, but also by the current flowing through the power supply line.

The present invention is based on the idea to automatically measure all imaginable scenarios for a plurality of instruments, instrument types or components thereof and to suitably store these information in a database. Upon request of a user, a customized data sheet may then be generated. This customized data sheet comprises only those customized information, such as performance metrics and performance scenarios that are requested and/or needed by the user. As the data sheet generated in this way no longer contains information that is not relevant for the user, a higher quality is achieved with this data sheet generation technique which in addition is less expensive than known non-customized techniques.

Also, the quality of the performance metrics, for example different values, in the data sheet may be increased for example from "nominal" (i.e. desired by the designer) to "typical" (i.e. actually measured).

Further, depending on the number of data base entries, statistical information such as mean, standard deviation, minimum and maximum can be generated.

According to a particularly preferred embodiment, the method further comprises the steps of operating the selected instrument based on the selected subset of performance scenarios in order to obtain information of the performance metrics under customized operation conditions, and feeding back the obtained information of the performance metrics under customized operation conditions to the measurement equipment and to the controller for an update determination of the amount of performance metrics for the plurality of different instrument types.

The particular benefit is that the manufacturer of the corresponding instruments receives information on how the customer preferably or typically uses the corresponding instruments under operation conditions, i.e. when, how and which performance scenarios and settings are preferred and less preferred. In addition, the manufacturer receives information on which settings the customer uses during operation, for example at which frequency operating point measurements are preferred. The feedback of this information provides the manufacturer with a qualitative assessment of the application profile of the instruments used by the customer. On the basis of this information, the manufacturer can then direct his development resources so that future instruments are better adapted to the respective customer wishes, requirements and application profiles. The manufacturer's knowledge of what the various customers of the instruments want means that the corresponding instruments can be adapted accordingly. This leads to an increase in the quality of the corresponding equipment and equipment with improved and/or additional functions can be provided.

The selected instrument is connected to the measurement equipment and the controller via a communication link. The communication link is preferably an internet connection, however, may also be any other wired or wireless connection. In one preferred aspect, the obtained information is then forwarded via the communication link immediately and dynamically. However, it may also be sufficient that the information is forwarded after predefined intervals, such as after every measurement.

Typically, a service or maintenance of the selected instrument is conducted regularly, preferably by the manufacturer and more preferably at the site of the manufacturer. Typical service intervals are one to two years. The service is very recommendable for complex instruments, such oscilloscopes, spectrum analyzers, network analyzers, measurement instruments and the like. A specific and important task during service is in particular the calibration of the instrument and/or their parts. In one alternative or additional aspect, the obtained information is read out during the conducted service or maintenance and is then forwarded to the measurement equipment, the controller and/or the database.

According to a particularly preferred embodiment, the method comprises the step of post-processing the performance metrics and storing the post-processed performance metrics together with corresponding information of the instrument type and performance scenarios in the database. The post-processing may be performed based on a predefined template and by employing a controller. In a particular preferred embodiment, the post-processed performance metrics are obtained by interpolating previously measured measurement results. Depending on the specific purpose, a data sheet may also offer different types of values, such as average values, typical values, typical ranges of the value, maximum values, minimum values, engineering tolerances, and/or nominal values. These different types of values may also be obtained via the post-processing step. According to a further preferred embodiment, the extracted information which is used for the generation of the customized data sheet is additionally displayed to a user on a display. This way, the user obtains the feedback of which information will actually be illustrated in the generated data sheet.

In a preferred embodiment, the displaying of the information on the display is performed before the step of generating a customized data sheet by the human-machine interface is executed. This has the advantage that the user obtains these information before the data sheet is finalized so that he has the option to make amendments or adaptions, such as deleting some of the information or adding additional information.

According to the invention, the measurement scenario include at least one of the following parameters: input power, measurement bandwidth, carrier frequency of an input signal, signal type, operating temperature, setting of the compensations for particular standards and/or internal settings. Other measurement scenarios and/or parameters may also be applicable. Optionally, the data sheet further contains the particular performance of the instrument as well as worst-case device performance for each performance metric.

In a further preferred embodiment, the generating step further comprises the step of providing a template comprising first fields for the selected subset of performance scenarios, second fields for the corresponding performance metrics and third fields for information of the selected instrument type and wherein the customized data sheet is generated by inserting the information in the corresponding fields. It goes without saying that alternative or additional fields may also exist. In a particularly preferred embodiment, the step of determining an amount of performance metrics comprises the step of providing the performance metrics by the instrument itself. This may be done e.g. every time when the user sets up a particular measurement.

According to the invention, the method further comprises the step of logging the user request from the human-machine-interface, and adding additional performance scenarios to the requested performance scenarios.

Also according to the invention, the method comprises the step of predicting the estimated performance of a device on performance scenarios which are not tested by modeling the actual performance of measurement scenarios which are tested. This is a pretty smart technique which is in particular advantageous for those application where a huge amount of different instrument types are present which however show a similar technical characteristics and behavior. In particular, by modeling parameters additional performance scenarios can be provided to the user (e.g. 1 dB more uncertainty to amplitude flatness for each Ghz RF).

In a further embodiment, the generated data sheet is an electronic data sheet. An electronic data sheet specifies characteristics in a formal structure that allows the information to be processed by a computer or machine. Such machine readable descriptions can facilitate information retrieval, display, design, testing, interfacing, verification, and system discovery.

According to a preferred embodiment, the human-machine-interface comprises a web service and the guided human-machine interaction process is a web-based service. This is in particular advantageous since then the data sheet may be generated upon demand by a user from anywhere, e.g. in a factory facility, so that an on-site data sheet generation is possible.

In a further preferred embodiment, the method comprises the step of using artificial intelligence techniques, such as trained or trainable neural networks and/or machine learning techniques, for inferring performance metrics. This lowers the overall measuring effort, reduces the database requirements and in addition provides very reliable results.

In one embodiment, the method comprises the step of storing a compact representation of the performance metrics for all measurement scenarios on the tested instrument itself.

According to a typical and preferred configuration, the method is applicable for automatic data sheet generation for at least one of the following instrument types: measurement instrument; test equipment; spectrum analyzer; network analyzer; signal generator; oscilloscope. It goes without saying that the method may also be effectively applied for other electric and electronic devices, components, systems and the like.

### CONTENT OF THE DRAWINGS

The present invention is described in greater detail in the following on the basis of the embodiments shown in the schematic figures of the drawings, in which:
- Fig. 1: a flow chart illustrating a method of creating and optimizing customized data sheets according to one aspect of the present invention;
- Fig. 2: a flow chart illustrating a method of creating and optimizing customized data sheets according to a further aspect of the present invention;
- Fig. 3: a block diagram illustrating a customer portal for creating and optimizing customized data sheets according to one aspect of the present invention.

The appended drawings are intended to provide further understanding of the embodiments of the invention. They illustrate embodiments and, in conjunction with the description, help to explain principles and concepts of the invention. Other embodiments and many of the advantages mentioned become apparent in view of the drawings. The elements in the drawings are not necessarily shown to scale.

### DESCRIPTION OF EMBODIMENTS

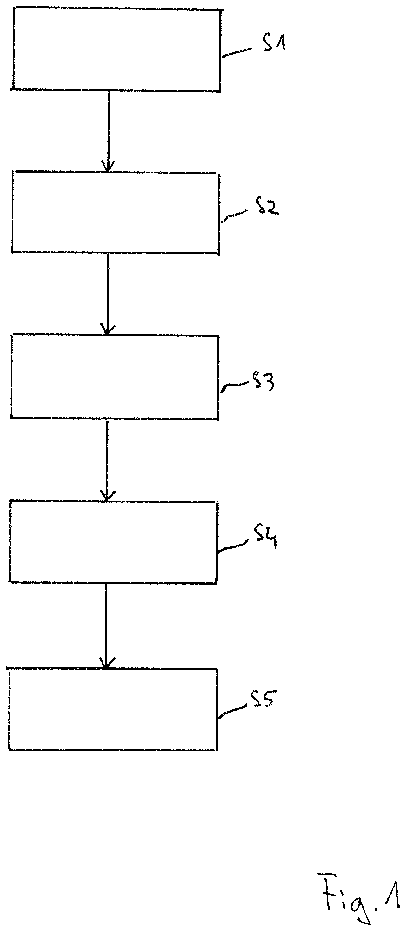

Fig. 1 shows a flow chart illustrating a method of creating customized data sheets according to one aspect of the present invention.

In a first step S1 according to the invention, an amount of performance metrics for a plurality of different instrument types is determined. According to the invention, the performance metricscomprise measuring values, which are e.g. provided by the manufacturer of the instrument and/or are measured using a suitable measuring equipment. Since depending on the specific purpose, a data sheet may offer different types of values, such as average values, typical values, typical ranges of the value, engineering tolerances, and/or nominal values, these additional information are preferably obtained by employing a suitable post-processing step (not shown in Fig. 1). Further, each set of performance metrics for a specific instrument type is based on a plurality of different performance scenarios. The determination of the performance metrics is typically controlled by a controller, which may be part of the measuring equipment and/or the tested instrument itself.

In a subsequent step S2 according to the invention, the determined performance metrics are stored in a database along with corresponding information of the tested instrument type and applied performance scenarios.

In a next step S3 according to the invention, a human-machine interface coupled to the database is provided. According to an essential function of the human-machine interface, the human-machine interface is configured to suitably assist the user in performing a user request, e.g. by applying a request-response communication. This is done according to the invention by employing a guided human-machine interaction process.

In a next step S4 according to the invention, a user starts the guided human-machine interaction process with the human-machine interface by employing an input terminal of the human-machine interface. The user inputs a request which is received by the human-machine interface. The user request comprises a first request for a selected instrument or instrument type of the plurality of instrument types. After the first user request is received, the human-machine interface offers to the user a choice, e.g. suitable set of performance scenarios for this instrument or this instrument type. The user then selects via a second request a subset of performance scenarios of the plurality of different performance scenarios for the selected instrument or instrument type. It goes without saying that it is also possible to reverse the sequence of the first and second request.

In a final step S5 according to the invention, the human-machine interface generates a customized data sheet automatically based on the user request, i.e. based on information obtained via the first and second user request. This is done by extracting, from the database, the information of the selected instrument type and the selected subset of performance scenarios and by merging them together with the corresponding performance metrics.

It goes without saying that for the sort of presentation of the data sheet there exist a plurality of different options, such as the presentation of the information on a paper data sheet, on a display (such as on a smart phone or the measuring equipment), in form of an electronic data sheet, etc. Also, the data values may be inserted in predefined fields of a suitable template and/or in the form of a graphical representation.

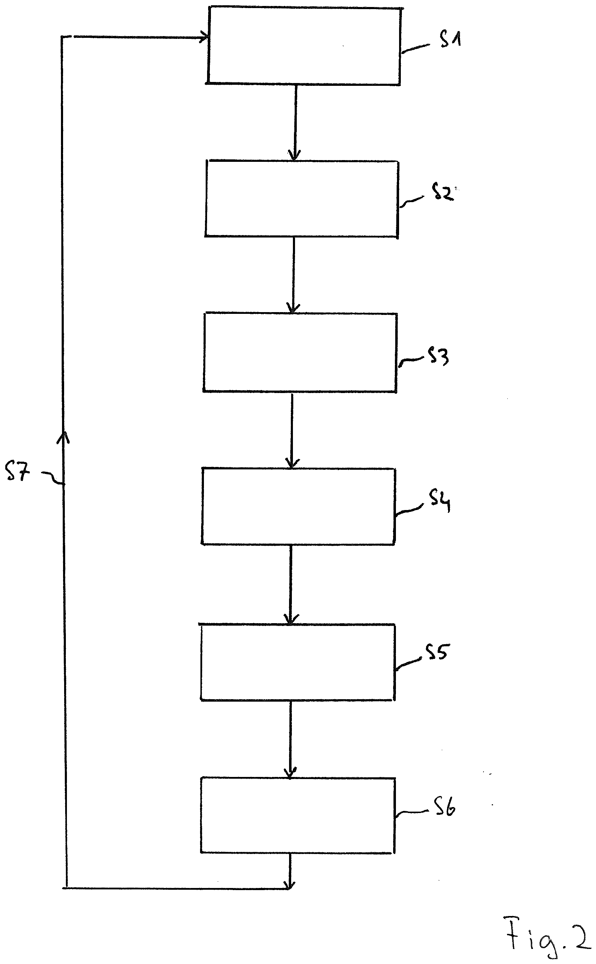

Fig. 2 shows a flow chart illustrating a method of creating and optimizing customized data sheets according to a further aspect of the present invention.

The method shown in Fig. 2 comprises basically the steps S1 - S5 of the method shown in Fig. 1. Additionally, the method in Fig. 2 comprises the further steps S6 and S7 which constitute a feed-back-loop.

In step S6 according to the invention, which is following to step S5, the selected instrument is operated based on the selected subset of performance scenarios. During operation mode, information of the performance metrics under customized operation conditions are obtained.

In a subsequent step S7 according to the invention, which forms a feedback-loop, the obtained information of the performance metrics are then feedback to the measurement equipment and to the controller in step S1 or the database in step S2 (not shown in Fig. 2). This way, it is possible to provide an update determination of the amount of performance metrics for the plurality of different instrument types.

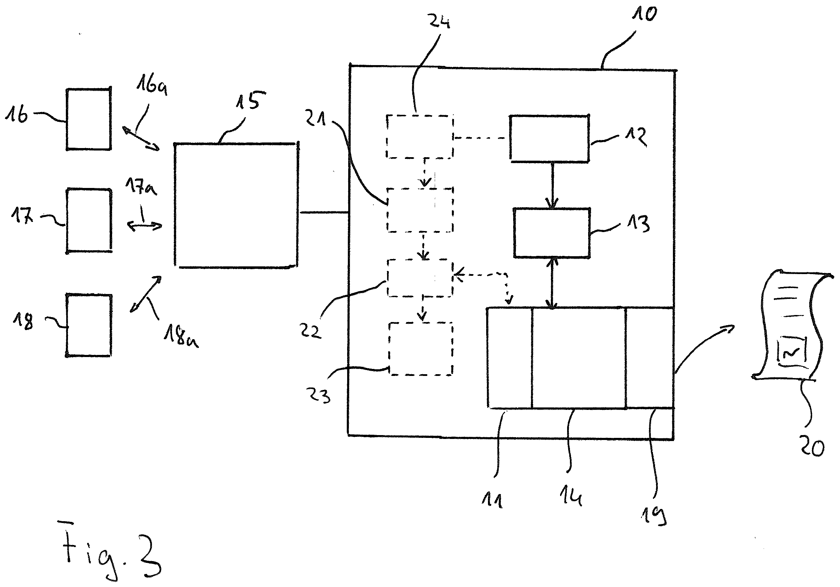

Fig. 3 shows a block diagram illustrating a customer portal for creating and optimizing customized data sheets according to one aspect of the present invention.

The customer portal is denoted by reference numeral 10. The customer portal 10 comprises a database 12, a controller 13 and a human-machine interface 14. Further, the customer portal 10 is connectable to a measuring equipment 15.

The measuring equipment 15 may be a rack or set of measurement instruments. The measuring equipment 15 may further comprise all equipment and devices which are needed for testing and/or measuring purposes, such as a power meter, signal generator, computer for IQ export, markers, etc. (not shown in Fig. 3). An external or internal computer controls the rack of measurement instruments and runs several measurement scenarios.

The measuring equipment 15 is configured to perform the testing of different instruments and/or instrument types, such as network analyzer, spectrum analyzer, oscilloscope, or any other electric or electronic devices. In Fig. 3, the different instrument types tested by the measuring equipment 15 are denoted by different reference numeral 16, 17, 18 and the testing of these instruments 16, 17, 18 is indicated by the arrows 16a, 17a, 18a.

The measuring equipment 15 is configured to perform at least one of the following measurements:
- amplitude flatness (+-dB), deviation from linear phase (+-°) and/or level uncertainty (+-dB) (all for certain bandwidths (80MHz, 320MHz, 500MHz,2GHz) and RFs (0-8GHz, <26.5GHz, <85GHz));
- displayed average noise level;
- phase noise, e.g. in decibel relative to the carrier (dBc) at 1khz Offset or 10kHz Offset;
- Electromagnetic compatibility (EMC) such as defined in IEEE802.11 ac @5GHz;
- intermodulation, such as third order intermodulation or second order intermodulation;
- residual spurious response.

The measuring equipment 15 is configured to determine for each of the instruments 16, 17, 18 (or instrument types) a specific amount of performance metrics. According to the invention, each set of performance metrics for a specific instrument type is based on one or a plurality of performance scenarios which are specific for the corresponding instrument type.

For measurement purposes, the measuring equipment 15 may employ a specific software which for example performs the measurement based on a parameter of the above list. This software may be part of a separate, specifically designed measurement computer, which is part of the measuring equipment 15, but not of the measurement instrument device 16, 17, 18. This software may be configured to derive performance values (such as amplitude flatness, noise floor, etc.) from raw measurement data (such as IQ-samples, quantizer data, etc.).

The performance metrics X determined by the measuring equipment 15 are then stored in the database 12 of the customer portal 10. Typically, but not necessarily, corresponding information of the tested instrument type and performance scenarios are stored in the database 12 either.

Preferably, but not necessarily, the information gathered during the measurement are post-processed using a controller 13, e.g. for providing average, minimum and/or maximum values, extrapolating and/or interpolating previously measured values, etc.

The human-machine interface 14 which is coupled to the database 12 comprises an input terminal 11. The input terminal 11 is configured to receive user requests. The human-machine-interface 14 is configured to assist a user (such as a customer) in performing a user request which is received via the input terminal 11. In particular, the human-machine-interface 14 is configured to assist a user by means of a guided human-machine interaction process. If the human-machine-interface 14 receives from a user a first request for a selected instrument or instrument type of the plurality of available instrument types, then it offers to the user a choice, depending on the user-selected instrument or instrument type, for a selected subset of performance scenarios (i.e. operating modes) of the plurality of different performance scenarios. According to the invention, this choice of the selected subset of performance scenarios which are also fetched from the database are assigned to the specific instrument or instrument type. In particular, by example, the user can state certain measurement settings of the measurement equipment 15. These measurement settings may include amplitude flatness for 10dB attenuation and 200 MHZ bandwidth for FSW-67 @ 50GHz.

After the user has made his choice, i.e. has selected the user-defined performance scenarios, an output module 19 within the customer portal 10 and connected to the human-machine-interface 14 is generating automatically a customized data sheet 20. This customized data sheet generation is made by extracting from the database 12 the information of the selected instrument type and the selected subset of performance scenarios together with the corresponding performance metrics.

The human-machine interface 14 may comprise e.g. one or more drop down menus selecting the different performance scenarios, a drill down selection, etc. The user has the option to select among e.g. various input powers, various measurement bandwidths, carrier frequency of input, signal type (OFDM wide band or narrowband sinusoidal), different operating temperature, setting of the compensations for particular standards (e.g. amount of acceptable phase noise compensation for the measurement instrument), internal settings, such as IF attenuation or amplifiers in the processing chains.

The extraction of the information from the database 12 may be gathered by estimating, interpolating and/or predicting data or information which may be obtained by a suitable database. The estimating, interpolating and/or predicting of information from a database may be done by storing values for a center frequency of 50GHz and 52GHz and subsequently by executing a preferably linear interpolation of the values for 51 Ghz. The database may preferably be a lookup database, but can also be any kind of storage means or a cloud based memory.

A specific software may be employed for the task of information gathering and/or for creating a statistics if several measurements are available. A suitable software may also be employed for creating a nicely formatted document with required values.

According to a specific preferred aspect, these information, such as direct measurement values, estimated/interpolated or predicted values, statistical information, etc., are communicated directly to the user. The user may also query additional information, such as requesting the spectrum flatness for a predefined device. This user request may then - in the form of a feedback loop - communicated to an application engineer responsible for this task and/or included directly to the list of measurements to be conducted, such as the ones sketched above.

According to the invention, all datasheet information and values which are necessary for the datasheet are stored (additionally or alternatively) in auditable database 12 of the customer portal 10. As such, a compact representation of the measurements of all imaginable scenarios is already stored on the customer portal 10. This has the additional benefit, that for example the customer portal 10 directly shows the expected measurement uncertainty, if the user has selected a certain measurement scenario.

According to the invention and also illustrated in dotted lines in Fig. 3, a technical implementation comprises:
According to the invention, the customer portal 10 comprises a database 24. The database 24 comprises a compact representation of some or all measurement results. The database 24 can be part of the database 12 or can also be a separate storage means.

According to the invention, the customer portal 10 further comprises a smart interface 21. The smart interface 21 is configured to know the state of all relevant configurations of the measurement instrument 15, such as of the hardware switches, settings, parameters, etc.

According to the invention, the customer portal 10 further comprises a software module 22. The software module 22 is configured to derive from measurement information from ongoing measurement which the user currently conducts, such as which uncertainty parameters are relevant for the user and which are not. The software module 22 is further configured to estimate, interpolate and/or predict the uncertainty of the measurement based on hardware settings, information from the database, customer measurement scenario, etc.

According to the invention, the customer portal 10 further comprises a screen or display 23. The display 23 is configured to show predefined information, whereas the information can also be remotely requested. In particular, according to the invention, the display 23 outputs uncertainty information on the screen, e.g. the following items:
- Error bars in spectrum for amplitude flatness or error bars in level display for level uncertainty;
- Thick grey and/or opaque line just behind the spectrum line. The thickness of the line may describe the measurement uncertainty. As an alternative, this could also be illustrated with varying color or transparency with more/less likelihood of the measurement point.
- Text-information, e.g. in a suitable table.

### LIST OF REFERENCE SIGNS AND NUMERALS

- 10: customer portal
- 11: input terminal
- 12: database
- 13: controller
- 14: human-machine interface
- 15: measuring equipment
- 16: instrument
- 16a: testing
- 17: instrument
- 17a: testing
- 18: instrument
- 18a: testing
- 19: output module
- 20: data sheet
- 21: (smart) interface
- 22: software module
- 23: screen, display
- 24: database

- S1-S7: steps
- X: performance metrics

## Claims

1. A method of creating and optimizing customized data sheets for a predefined instrument type, the method comprising:
a) determining (S1), using a measuring equipment (15) and controlled by a controller (13), an amount of performance metrics for a plurality of different instrument types, wherein each set of performance metrics for a specific instrument type is based on a plurality of different performance scenarios which are specific for the corresponding instrument type,
wherein the measurement scenario includes at least one of input power, measurement bandwidth, carrier frequency of an input signal, signal type, operating temperature, setting of the compensations for particular standards, and internal settings, and
wherein the performance metrics comprise measuring values;
b) storing (S2) the determined performance metrics together with corresponding information of the instrument type and performance scenarios in a database (12);
c) providing (S3) a human-machine interface (14) coupled to the database, wherein the human-machine interface is configured to credibly assist the user in performing a user request by employing a guided human-machine interaction process;
d) receiving (S4) the user request via an input terminal of the human-machine interface, wherein the user request comprises a first request for a selected instrument (16, 17, 18) or instrument type of the plurality of instrument types and a second request for a selected subset of performance scenarios of the plurality of different performance scenarios for the selected instrument or instrument type;
e) generating (S5), by the human-machine interface, a customized data sheet automatically based on the user request by extracting from the database the information of the selected instrument type and the selected subset of performance scenarios together with the corresponding performance metrics,
f) operating (S6) the selected instrument (16, 17, 18) based on the selected subset of performance scenarios in order to obtain information of the performance metrics under customized operation conditions, and
g) feeding back (S7) the obtained information of the performance metrics under customized operation conditions to at least one of the measuring equipment, the controller or the database for an update determination of the amount of performance metrics for the plurality of different instrument types; and
h) providing, in a further database (24), a compact representation of the measurement results, providing, by a smart interface (21), the state of all relevant configurations of the measuring equipment (15) such as hardware switches, settings and parameters, deriving, by a software module (22), from measurement information from ongoing measurements currently conducted, which uncertainty parameters are relevant for the user, predicting the uncertainty of the measurement based on hardware settings, information from the database and customer measurement scenario, and showing, on a display (23), the measurement uncertainty.

2. The method of claim 1 wherein the selected instrument is connected to the measuring equipment, the controller and the database, respectively, via a communication link and wherein the obtained information is forwarded via the communication link immediately or after predefined intervals.

3. The method of any of the preceding claims, further comprising:
conducting a maintenance or service of the selected instrument,
reading out the obtained information during the maintenance or
service, and
forwarding the read-out obtained information to the measuring equipment, the controller and the database, respectively.

4. The method according to any of the preceding claims, further comprising:
post-processing the performance metrics, and storing the post-processed performance metrics together with corresponding information of the instrument type and performance scenarios in the database, and/or
displaying the extracted information used for the generation of the customized data sheet on a display, wherein displaying the extracted information is in particular performed before the step of generating a customized data sheet by the human-machine interface is executed.

5. The method according to any of the preceding claims, wherein the generating step further comprises:
providing a template comprising first fields for the selected subset of performance scenarios, second fields for the corresponding performance metrics and third fields for information of the selected instrument type and wherein the customized data sheet is generated by inserting the information in the corresponding fields.

6. The method according to any of the preceding claims, wherein the step of determining an amount of performance metrics comprises:
providing the performance metrics by the instrument itself.

7. The method according to any of the preceding claims,
wherein the generated data sheet is an electronic data sheet, and/or
wherein the human-machine-interface comprises a web service and the guided human-machine interaction process is a web-based service.

8. The method according to any of the preceding claims, further comprising:
using artificial intelligence techniques for inferring performance metrics,
and/or
storing a compact representation of the performance metrics for all measurement scenarios on the instrument.

9. The method according to any of the preceding claims, wherein the instrument types is at least one of:
measurement instrument;
test equipment;
spectrum analyzer;
network analyzer;
signal generator;
oscilloscope.

10. A combination of a measuring equipment (15) and a customer portal (10) for creating and optimizing customized data sheets for a predefined instrument type, the customer portal comprising:
a0) the measuring equipment (15) being adapted to determine (S1) an amount of performance metrics for a plurality of different instrument types, wherein each set of performance metrics for a specific instrument type is based on a plurality of different performance scenarios which are specific for the corresponding instrument type,
a) a database (12) which is configured to store the performance metrics of an instrument type together with corresponding information of the instrument type and performance scenarios which are specific for the corresponding instrument type, wherein the measurement scenario includes at least one of input power, measurement bandwidth, carrier frequency of an input signal, signal type, operating temperature, setting of the compensations for particular standards, and internal settings, and
wherein the performance metrics comprise measuring values;
b) a human-machine interface (14) coupled to the database,
wherein the human-machine interface comprises an input terminal for receiving user requests and wherein the human-machine interface is configured
to credibly assist a user in performing a user request by means of a guided human-machine interaction process by receiving from a user a first request for a selected instrument or instrument type of the plurality of instrument types and a second request for a selected subset of performance scenarios of the plurality of different performance scenarios for the selected instrument or instrument type, and
to generate automatically a customized data sheet based on the user request by extracting from the database the information of the selected instrument type and the selected subset of performance scenarios together with the corresponding performance metrics;
c) a feed-back-loop (S6, S7), wherein the feed-back-loop is configured to be connectable to a selected instrument (16, 17, 18), wherein during customized operation condition the selected instrument is operated based on the selected subset of performance scenarios, and wherein the feedback-loop is further configured to feedback the obtained information of the performance metrics under customized operation conditions to the database for additionally storing these obtained information in the database; and
d1) a display (23) for showing a measurement uncertainty,
d2) a further database (24) comprising a compact representation of the measurement results,
d3) a smart interface (21) knowing the state of all relevant configurations of the measuring equipment (15) such as hardware switches, settings and parameters, and
d4) a software module (22) configured to derive from measurement information from ongoing measurements currently conducted, which uncertainty parameters are relevant for the user, and further configured to predict the uncertainty of the measurement based on hardware settings, information from the database and customer measurement scenario.

11. A non-transitory computer-readable recording medium, storing instructions executable by a computer processor, causing the computer processor to execute a method of creating and optimizing customized data sheets for a predefined instrument type according to claims 2-9.

## Patentansprüche

1. Verfahren zum Herstellen und Optimieren von benutzerdefinierten Datenblättern für einen vordefinierten Instrumententyp, wobei das Verfahren Folgendes umfasst:
a) Bestimmen (S1) einer Menge von Leistungsmetriken für eine Vielzahl von verschiedenen Instrumententypen unter Verwendung einer Messausrüstung (15) und durch eine Steuerung (13) gesteuert, wobei jeder Satz von Leistungsmetriken für einen spezifischen Instrumententyp auf einer Vielzahl von verschiedenen Leistungsszenarios, die für den entsprechenden Instrumententyp spezifisch sind, basiert,
wobei das Messszenario mindestens eines von Eingangsleistung, Messbandbreite, Trägerfrequenz eines Eingangssignals, Signaltyp, Betriebstemperatur, Einstellung der Kompensationen für bestimmte Standards und interne Einstellungen beinhaltet, und
wobei die Leistungsmetriken Messwerte umfassen;
b) Speichern (S2) der bestimmten Leistungsmetriken zusammen mit entsprechenden Informationen zum Instrumententyp und Leistungsszenarien in einer Datenbank (12);
c) Bereitstellen (S3) einer Mensch-Maschine-Schnittstelle (14), die an die Datenbank gekoppelt ist, wobei die Mensch-Maschine-Schnittstelle dazu ausgelegt ist, den Benutzer beim Durchführen einer Benutzeranforderung durch Einsetzen eines geführten Mensch-Maschine-Interaktionsprozesses zuverlässig zu unterstützen;
d) Empfangen (S4) der Benutzeranforderung via einen Eingangsanschluss der Mensch-Maschine-Schnittstelle, wobei die Benutzeranforderung eine erste Anforderung eines ausgewählten Instruments (16, 17, 18) oder Instrumententyps der Vielzahl von Instrumententypen und eine zweite Anforderung eines ausgewählten Untersatzes von Leistungsszenarien der Vielzahl von verschiedenen Leistungsszenarien für das ausgewählte Instrument oder den ausgewählten Instrumententyp umfasst;
e) automatisches Erzeugen (S5) eines benutzerdefinierten Datenblatts durch die Mensch-Maschine-Schnittstelle auf Basis der Benutzeranforderung durch Extrahieren der Informationen zum ausgewählten Instrumententyp und zum ausgewählten Untersatz von Leistungsszenarien zusammen mit den entsprechenden Leistungsmetriken aus der Datenbank,
f) Betreiben (S6) des ausgewählten Instruments (16, 17, 18) auf Basis des ausgewählten Untersatzes von Leistungsszenarien, um Informationen der Leistungsmetriken und der benutzerdefinierten Betriebsbedingungen zu erhalten, und
g) Rückmelden (S7) der erhaltenen Informationen der Leistungsmetriken und der benutzerdefinierten Betriebsbedingungen an mindestens eines der Messausrüstung, der Steuerung oder der Datenbank für eine Aktualisierungsbestimmung der Menge von Leistungsmetriken für die Vielzahl von verschiedenen Instrumententypen; und
h) Bereitstellen einer kompakten Darstellung der Messergebnisse in einer weiteren Datenbank (24), Bereitstellen des Status von allen relevanten Auslegungen der Messausrüstung (15), wie etwa Hardwareschalter, Einstellungen und Parameter, durch eine intelligente Schnittstelle (21), Ableiten aus Messinformationen von laufenden Messungen, die derzeit vorgenommen werden, durch ein Softwaremodul (22), welche Unsicherheitsparameter für den Benutzer relevant sind, Voraussagen der Unsicherheit der Messung auf Basis von Hardwareeinstellungen, Informationen aus der Datenbank und einem Kundenmessszenario sowie Zeigen der Messunsicherheit auf einer Anzeige (23).

2. Verfahren nach Anspruch 1, wobei das ausgewählte Instrument via einen Kommunikationslink mit der Messausrüstung, der Steuerung bzw. der Datenbank verbunden ist und wobei die erhaltenen Informationen via den Kommunikationslink sofort oder nach vordefinierten Intervallen weitergeleitet werden.

3. Verfahren nach einem der vorhergehenden Ansprüche, das ferner Folgendes umfasst:
Vornehmen einer Wartung oder eines Service am ausgewählten Instrument,
Auslesen der erhaltenen Informationen während der Wartung oder des Service, und
Weiterleiten der ausgelesenen erhaltenen Informationen zur Messausrüstung, zur Steuerung bzw. zur Datenbank.

4. Verfahren nach einem der vorhergehenden Ansprüche, das ferner Folgendes umfasst:
Nachverarbeiten der Leistungsmetriken und Speichern der nachverarbeiteten Leistungsmetriken zusammen mit entsprechenden Informationen zum Instrumententyp und zu Leistungsszenarien in der Datenbank, und/oder
Anzeigen der extrahierten Informationen, die für die Erzeugung des benutzerdefinierten Datenblatts verwendet werden, auf einer Anzeige, wobei das Anzeigen der extrahierten Informationen insbesondere durchgeführt wird, bevor der Schritt des Erzeugens eines benutzerdefinierten Datenblatts durch die Mensch-Maschine-Schnittstelle ausgeführt wird.

5. Verfahren nach einem der vorhergehenden Ansprüche, wobei der Schritt des Erzeugens ferner Folgendes umfasst:
Bereitstellen einer Vorlage, die erste Felder für den ausgewählten Untersatz von Leistungsszenarien, zweite Felder für die entsprechenden Leistungsmetriken und dritte Felder für Informationen zum ausgewählten Instrumententyp umfasst, und wobei das benutzerdefinierte Datenblatt durch Einfügen der Informationen in die entsprechenden Felder erzeugt wird.

6. Verfahren nach einem der vorhergehenden Ansprüche, wobei der Schritt des Bestimmens einer Menge von Leistungsmetriken Folgendes umfasst:
Bereitstellen der Leistungsmetriken durch das Instrument selbst.

7. Verfahren nach einem der vorhergehenden Ansprüche,
wobei das erzeugte Datenblatt ein elektronisches Datenblatt ist, und/oder
wobei die Mensch-Maschine-Schnittstelle einen Webdienst umfasst und der geführte Mensch-Maschine-Interaktionsprozess ein webbasierter Dienst ist.

8. Verfahren nach einem der vorhergehenden Ansprüche, das ferner Folgendes umfasst:
Verwenden von künstlichen Intelligenztechniken zum Herleiten von Leistungsmetriken,
und/oder
Speichern einer kompakten Darstellung der Leistungsmetriken für alle Messszenarien im Instrument.

9. Verfahren nach einem der vorhergehenden Ansprüche, wobei die Instrumententyp mindestens eines von Folgendem ist:
Messinstrument;
Testausrüstung;
Spektrumanalysator;
Netzwerkanalysator;
Signalgenerator;
Oszilloskop.

10. Kombination aus einer Messausrüstung (15) und einem Kundenportal (10) zum Erstellen und Optimieren von benutzerdefinierten Datenblättern für einen vorbestimmten Instrumententyp, wobei das Kundenportal Folgendes umfasst:
a0) die Messausrüstung (15), die angepasst ist, für eine Vielzahl von verschiedenen Instrumententypen eine Menge von Leistungsmetriken zu bestimmen (S1), wobei jeder Satz von Leistungsmetriken für einen spezifischen Instrumententyp auf einer Vielzahl von verschiedenen Leistungsszenarios, die für den entsprechenden Instrumententyp spezifisch sind, basiert,
a) eine Datenbank (12), die dazu ausgelegt ist, die Leistungsmetriken eines Instrumententyps zusammen mit entsprechenden Informationen zum Instrumententyp und Leistungsmetriken, die für den entsprechenden Instrumententyp spezifisch sind, zu speichern, wobei das Messszenario mindestens eines von Eingangsleistung, Messbandbreite, Trägerfrequenz eines Eingangssignals, Signaltyp, Betriebstemperatur, Einstellung der Kompensationen für bestimmte Standards und interne Einstellungen beinhaltet, und
wobei die Leistungsmetriken Messwerte umfassen;
b) eine Mensch-Maschine-Schnittstelle (14), die an die Datenbank gekoppelt ist, wobei die Mensch-Maschine-Schnittstelle einen Eingangsanschluss zum Empfangen von Benutzeranforderungen umfasst und wobei die Mensch-Maschine-Schnittstelle zu Folgendem ausgelegt ist
zuverlässiges Unterstützen eines Benutzers beim Durchführen einer Benutzeranforderung mittels eines geführten Mensch-Maschine-Interaktionsprozesses durch Empfangen einer ersten Anforderung eines ausgewählten Instruments oder Instrumententyps der Vielzahl von Instrumententypen und einer zweiten Anforderung eines ausgewählten Untersatzes von Leistungsszenarien der Vielzahl von verschiedenen Leistungsszenarien für das ausgewählte Instrument oder den ausgewählten Instrumententyp von einem Benutzer, und
automatisches Erzeugen eines benutzerdefinierten Datenblatts auf Basis der Benutzeranforderung durch Extrahieren der Informationen zum ausgewählten Instrumententyp und zum ausgewählten Untersatz von Leistungsszenarien zusammen mit den entsprechenden Leistungsmetriken aus der Datenbank;
c) eine Rückmeldungsschleife (S6, S7), wobei die Rückmeldungsschleife dazu ausgelegt ist, mit einem ausgewählten Instrument (16, 17, 18) verbindbar zu sein, wobei während der benutzerdefinierten Betriebsbedingung das ausgewählte Instrument auf Basis des ausgewählten Untersatzes von Leistungsszenarien betrieben wird und wobei die Rückmeldungsschleife ferner dazu ausgelegt ist, die erhaltenen Informationen zu den Leistungsmetriken unter benutzerdefinierten Betriebsbedingungen zum zusätzlichen Speichern dieser erhaltenen Informationen in der Datenbank an die Datenbank rückzumelden; und
d1) eine Anzeige (23) zum Zeigen einer Messunsicherheit,
d2) eine weitere Datenbank (24), die eine kompakte Darstellung der Messergebnisse umfasst,
d3) eine intelligente Schnittstelle (21), die den Status von allen relevanten Auslegungen der Messausrüstung (15), wie etwa Hardwareschalter, Einstellungen und Parameter, kennt, und
d4) ein Softwaremodul (22), das dazu ausgelegt ist, aus Messinformationen von laufenden Messungen, die derzeit vorgenommen werden, abzuleiten, welche Unsicherheitsparameter für den Benutzer relevant sind, und ferner dazu ausgelegt, die Unsicherheit der Messung auf Basis von Hardwareeinstellungen, Informationen aus der Datenbank und einem Kundenmessszenario vorauszusagen.

11. Nichttransitorisches computerlesbares Aufzeichnungsmedium, auf dem Anweisungen gespeichert sind, die von einem Computerprozessor ausführbar sind und den Computerprozessor veranlassen, ein Verfahren zum Erstellen und Optimieren von benutzerdefinierten Datenblättern für einen vordefinierten Instrumententyp nach den Ansprüchen 2-9 auszuführen.

## Revendications

1. Procédé de création et d'optimisation de fiches techniques personnalisées pour un type d'instrument prédéfini, le procédé comprenant les étapes consistant à :
a) déterminer (S1), à l'aide d'un équipement de mesure (15) commandé par un dispositif de commande (13), une quantité de mesures de performance pour une pluralité de types d'instruments différents, dans lequel chaque ensemble de mesures de performance pour un type d'instrument spécifique est basé sur une pluralité de scénarios de performance différents qui sont spécifiques au type d'instrument correspondant,
dans lequel le scénario de mesure comporte au moins une parmi une puissance d'entrée, une largeur de bande de mesure, une fréquence porteuse d'un signal d'entrée, d'un type de signal, d'une température de fonctionnement, d'un réglage des compensations pour des normes particulières, et des réglages internes, et
dans lequel les mesures de performance comprennent des valeurs de mesure ;
b) stocker (S2) les mesures de performance déterminées avec des informations correspondantes du type d'instrument et des scénarios de performance dans une base de données (12) ;
c) fournir (S3) une interface homme-machine (14) couplée à la base de données, dans lequel l'interface homme-machine est configurée pour assister de manière crédible l'utilisateur lors de la réalisation d'une demande d'utilisateur en employant un processus d'interaction homme-machine guidée ;
d) recevoir (S4) la demande d'utilisateur via un terminal d'entrée de l'interface homme-machine, dans lequel la demande d'utilisateur comprend une première demande d'un instrument (16, 17, 18) ou d'un type d'instrument sélectionné de la pluralité de types d'instruments, et une deuxième demande d'un sous-ensemble sélectionné de scénarios de performance de la pluralité de scénarios de performance différents de l'instrument ou du type d'instrument sélectionné ;
e) générer (S5) automatiquement, par l'interface homme-machine, une fiche technique personnalisée sur la base de la demande d'utilisateur en extrayant de la base de données les informations du type d'instrument sélectionné et du sous-ensemble sélectionné de scénarios de performance avec les mesures de performance correspondantes,
f) actionner (S6) l'instrument (16, 17, 18) sélectionné sur la base du sous-ensemble sélectionné de scénarios de performance afin d'obtenir des informations des mesures de performance dans des conditions de fonctionnement personnalisées, et
g) renvoyer (S7) les informations obtenues des mesures de performance dans des conditions de fonctionnement personnalisées à au moins un parmi l'équipement de mesure, le dispositif de commande ou la base de données pour une détermination de mise à jour de la quantité de mesures de performance pour la pluralité de types d'instruments différents ; et
h) fournir, dans une base de données supplémentaire (24), une représentation compacte des résultats de mesure, fournir par une interface intelligente (21), l'état de toutes les configurations pertinentes de l'équipement de mesure (15) comme les commutateurs, réglages et paramètres matériels, déduire, par un module logiciel (22), à partir d'informations de mesure provenant de mesures en cours actuellement effectuées, quels paramètres d'incertitude sont pertinents pour l'utilisateur, prédire l'incertitude de la mesure sur la base de réglages matériels, d'informations provenant de la base de données et du scénario de mesure de client, et présenter l'incertitude de mesure sur un affichage (23).

2. Procédé de la revendication 1, dans lequel l'instrument sélectionné est connecté à l'équipement de mesure, au dispositif de commande et à la base de données, respectivement, via une liaison de communication, et dans lequel les informations obtenues sont transmises via la liaison de communication immédiatement ou après des intervalles prédéfinis.

3. Procédé de l'une quelconque des revendications précédentes, comprenant en outre les étapes consistant à :
réaliser une maintenance ou un service de l'instrument sélectionné,
lire des informations obtenues au cours de la maintenance ou du service, et
transmettre les informations obtenues lues à l'équipement de mesure, au dispositif de commande et à la base de données, respectivement.

4. Procédé selon l'une quelconque des revendications précédentes, comprenant en outre les étapes consistant à :
post-traiter les mesures de performance, et stocker les mesures de performance post-traitées avec des informations correspondantes du type d'instrument et des scénarios de performance dans la base de données, et/ou
afficher les informations extraites utilisées pour la génération de la fiche technique personnalisée sur un affichage, dans lequel l'affichage des informations extraites est notamment réalisé avant l'exécution de l'étape de génération d'une fiche technique personnalisée par l'interface homme-machine.

5. Procédé selon l'une quelconque des revendications précédentes, dans lequel l'étape de génération comprend en outre l'étape consistant à :
fournir un modèle comprenant des premiers champs du sous-ensemble sélectionné de scénarios de performance, des deuxièmes champs des mesures de performance correspondantes et des troisièmes champs d'informations du type d'instrument sélectionné, et dans lequel la fiche technique personnalisée est générée en insérant les informations dans les champs correspondants.

6. Procédé selon l'une quelconque des revendications précédentes, dans lequel l'étape de détermination d'une quantité de mesures de performance comprend l'étape consistant à :
fournir des mesures de performance par l'instrument lui-même.

7. Procédé selon l'une quelconque des revendications précédentes, dans lequel la fiche technique générée est une fiche technique électronique, et/ou dans lequel l'interface homme-machine comprend un service web et le processus d'interaction homme-machine guidée est un service basé sur le web.

8. Procédé selon l'une quelconque des revendications précédentes, comprenant en outre les étapes consistant à :
utiliser des techniques d'intelligence artificielle pour déduire des mesures de performance, et/ou
stocker une représentation compacte des mesures de performance pour tous les scénarios de mesure sur l'instrument.

9. Procédé selon l'une quelconque des revendications précédentes, dans lequel le type d'instrument est au moins un parmi :
un instrument de mesure ;
un équipement de test ;
un analyseur de spectre ;
un analyseur de réseau ;
un générateur de signaux ;
un oscilloscope.

10. Combinaison d'un équipement de mesure (15) et d'un portail client (10) pour créer et optimiser des fiches techniques personnalisées pour un type d'instrument prédéfini, le portail client comprenant :
a0) l'équipement de mesure (15) qui est adapté pour déterminer (S1) une quantité de mesures de performance pour une pluralité de types d'instruments différents, dans lequel chaque ensemble de mesures de performance pour un type d'instrument spécifique est basé sur une pluralité de scénarios de performance différents qui sont spécifiques au type d'instrument correspondant,
a) une base de données (12) qui est configurée pour stocker les mesures de performance d'un type d'instrument avec des informations correspondantes du type d'instrument et des scénarios de performance qui sont spécifiques au type d'instrument correspondant, dans lequel le scénario de mesure comporte au moins une parmi une puissance d'entrée, une largeur de bande de mesure, une fréquence porteuse d'un signal d'entrée, d'un type de signal, d'une température de fonctionnement, d'un réglage des compensations pour des normes particulières, et des réglages internes, et
dans lequel les mesures de performance comprennent des valeurs de mesure ;
b) une interface homme-machine (14) couplée à la base de données, dans lequel l'interface homme-machine comprend un terminal d'entrée pour recevoir une demande d'utilisateurs et dans lequel l'interface homme-machine est configurée
pour assister de manière crédible un utilisateur lors de la réalisation d'une demande d'utilisateur au moyen d'un processus d'interaction homme-machine guidée en recevant d'un utilisateur une première demande d'un instrument ou d'un type d'instrument sélectionné de la pluralité de types d'instruments, et une deuxième demande d'un sous-ensemble sélectionné de scénarios de performance de la pluralité de scénarios de performance différents de l'instrument ou du type d'instrument sélectionné, et
pour générer automatiquement une fiche technique personnalisée sur la base de la demande d'utilisateur en extrayant de la base de données les informations du type d'instrument sélectionné et du sous-ensemble sélectionné de scénarios de performance avec les mesures de performance correspondantes ;
c) une boucle de rétroaction (S6, S7), dans lequel la boucle de rétroaction est configurée pour pouvoir être connectée à un instrument (16, 17, 18) sélectionné, dans lequel pendant une condition de fonctionnement personnalisée, l'instrument sélectionné est actionné sur la base du sous-ensemble sélectionné de scénarios de performance, et dans lequel la boucle de rétroaction est configurée en outre pour renvoyer les informations obtenues des mesures de performance dans des conditions de fonctionnement personnalisées à la base de données pour stocker de manière supplémentaire ces informations obtenues dans la base de données ; et
d1) un affichage (23) pour présenter une incertitude de mesure,
d2) une base de données supplémentaire (24) comprenant une représentation compacte des résultats de mesure,
d3) une interface intelligente (21) connaissant l'état de toutes les configurations pertinentes de l'équipement de mesure (15) comme les commutateurs, réglages et paramètres matériels, et
d4) un module logiciel (22) configuré pour déduire à partir d'informations de mesure provenant de mesures en cours actuellement effectuées, quels paramètres d'incertitude sont pertinents pour l'utilisateur, et configuré en outre pour prédire l'incertitude de la mesure sur la base de réglages matériels, d'informations provenant de la base de données et d'un scénario de mesure de client.

11. Support d'enregistrement non transitoire lisible par ordinateur, stockant des instructions exécutables par un processeur informatique, amenant le processeur informatique à exécuter un procédé de création et d'optimisation de fiches techniques personnalisées pour un type d'instrument prédéfini selon les revendications 2 à 9.
